# EUROPEAN PATENT APPLICATION

(11) **EP 4 844 021 A1**
(43) Date of publication of application: **25.11.2026**
(21) Application number: 24918451.6
(22) Date of filing: 26.12.2024
(51) Int. Cl.: C08J 9/38, C08L 25/04, C08L 61/00, C08L 75/00, C08L 101/00, F16L 59/065

(54) **RESIN MEMBER AND VACUUM HEAT INSULATING MATERIAL**

(30) Priority: 17.01.2024 JP 2024005620
(71) Applicant: Asahi Kasei Construction Materials Corporation, Tokyo 101-8101 (JP)
(72) Inventor: MIHORI, Hisashi, Tokyo 100-0006 (JP); WADA, Masaki, Tokyo 100-0006 (JP)
(74) Representative: Strehl & Partner mbB
(86) International application number: PCT/JP2024/046290
(87) International publication number: WO 2025/154541

(57) **Abstract**

The object is to provide a vacuum insulation panel that has a good surface smoothness level and excellent thickness direction strength as a vacuum insulation panel and that also has good installability, and also to provide a core material for this vacuum insulation panel. A resin member having a substantially flat plate shape has a density of not less than 50 kg/m³ and not more than 250 kg/m³, and when an amount of indentation (mm) of the resin member upon application of a load to the resin member in a parallel direction to a thickness direction of the resin member by cylindrical stainless steel SUS304 having a diameter of 6 mm and a mass of 3 kg is defined as Dh0, Dh0 is less than 7.5 mm.

## Description

### TECHNICAL FIELD

T he present disclosure relates to a resin member and a vacuum insulation panel.

### BACKGROUND

The reduction of greenhouse gas emissions due to concerns about global warming has become an urgent matter in recent years. In this context, increased thermal insulation of buildings, etc., and more specifically insulating materials have an important role as one means of reducing greenhouse gas emissions through energy efficiency. Although insulating materials based on foamed plastics having high insulating performance are most commonly used, there has also been increasing adoption of vacuum insulation panels from viewpoints of further enhancing insulating performance and environmental issues. The use of fibrous materials, powders, foams, and the like as core materials of vacuum insulation panels is known in the art. However, the surface smoothness of a vacuum insulation panel is often poor when using fibrous materials, which are most typically used, and also when using powders, and surface smoothness straight after production and over time is also an issue even in a vacuum insulation panel where a foam is used as a core material. Moreover, particularly in a situation in which a fibrous material is used as a core material, the thickness of the material under atmospheric pressure is large relative to the thickness thereof under reduced pressure (i.e., there is a large thickness change), which has resulted in a problem of poor operability in a process of loading the material into a highly airtight bag to produce a vacuum insulation panel. On the other hand, in relation to vacuum insulation panels where a foam is used as a core material, a known technique involves using what is referred to as an "open-cell foam" in which a cellular structure is maintained as a core material, but the thickness direction strength of such a foam is barely able to withstand reduced pressure (atmospheric pressure). Therefore, there has been a concern that cells may be destroyed (i.e., surface smoothness may further deteriorate) upon the application of a load in a thickness direction during handling, such as during on-site installation.

Patent Literature (PTL) 1 discloses a technique relating to a vacuum insulation panel that can improve structural strength and reduce overall weight as a result of a core material that is formed of a cured phenolic resin foam including cells of 50 µm to 500 µm and as a result of fine holes of 0.5 µm to 30 µm being formed at circumferential surfaces of the cells such that the cured phenolic resin foam has a porosity of 50% or more.

Moreover, PTL 2 discloses a vacuum insulation panel that uses a fluorocarbon-free insulating material having further reduced thermal conductivity, light weight, and high performance as a result of a molded product in which cells have been squashed into a flattened form by compression after foaming being used as an open-cell foam serving as a core material and as a result of the degree of depressurization being set as 0.1 Torr to 0.01 Torr.

Furthermore, PTL 3 discloses a technique in which by avoiding the formation of deformed cell membranes at vertices and ridgelines of a core material forming a vacuum insulator, deformation of open-cell urethane caused by atmospheric compression after vacuum evacuation can be inhibited throughout the entire insulator, and the degree of vacuum and insulating performance of the vacuum insulator can be maintained over a long period.

### CITATION LIST

### Patent Literature

PTL 1: JP 2014-503054 A
PTL 2: JP H6-213561 A
PTL 3: JP 2020-020431 A

### SUMMARY

### (Technical Problem)

However, in PTL 1, since an open-cell phenolic foam is used as a core material of a vacuum insulation panel while exploiting the cellular structure thereof, the cellular structure of the phenolic foam serving as the core material merely appears to be maintained in a reduced pressure state, and there have been problems that the phenolic foam does not have excellent surface smoothness straight after production due to the presence of sites where there is localized cell destruction due to the inability to withstand reduced pressure (atmospheric pressure), for example, and also that the destruction of cells over time means that surface smoothness does not stabilize. Moreover, since thickness direction strength of the phenolic foam can barely withstand reduced pressure (atmospheric pressure) through maintenance of the cellular structure, there has been a problem that cells are easily destroyed and surface smoothness further deteriorates upon the impact of a load or the like of atmospheric pressure or greater in the thickness direction.

PTL 2 discloses a technique relating to a vacuum insulation panel in which an open-cell compressed rigid urethane foam is used as a core material. A feature of this technique is that open cells in the foam are maintained in a flattened form to increase the degree of depressurization to 0.1 Torr to 0.01 Torr, but this technique suffers from the same issues as PTL 1 in terms that surface smoothness is poor due to localized destruction of cells that cannot withstand atmospheric pressure straight after production and over time and also that surface smoothness does not stabilize over time due to restorative force of cells that are in a deformed state. Moreover, since the thickness direction strength can barely withstand reduced pressure (atmospheric pressure) through maintenance of the cellular structure in the same manner as in PTL 1, this technique has suffered from a problem that cells are easily destroyed and surface smoothness further deteriorates upon the impact of a load or the like of atmospheric pressure or greater in the thickness direction during handling, such as during on-site installation.

Moreover, a feature of the technique in PTL 3 is that the formation of deformed cell membranes at vertices and ridgelines of a core material forming a vacuum insulator is avoided as a method of increasing compressive strength of an open-cell urethane foam, but although this technique can, to a certain extent, inhibit deformation caused by atmospheric compression after vacuum evacuation throughout the entire insulator, compressive strength cannot be considered high, and cells are easily destroyed upon the impact of a load or the like in a thickness direction, thus resulting in a problem of poor surface smoothness.

Accordingly, an object of the present disclosure is to provide a vacuum insulation panel that has a good surface smoothness level and excellent thickness direction strength as a vacuum insulation panel and that also has good installability, and also to provide a core material for this vacuum insulation panel.

### (Solution to Problem)

As a result of diligent and extensive studies conducted with the aim of solving the problems described above, the inventors developed a vacuum insulation panel having good surface smoothness by performing compression molding of a foam in advance to destroy the cellular structure and thereby produce a resin member that does not substantially have cells, subsequently inserting this resin member as a core material into an exterior film bag, and placing the inside of the bag under a reduced pressure condition. In addition, this vacuum insulation panel maintains a good surface smoothness level as a result of having excellent load resistance in a thickness direction. Specifically, the present disclosure is as set forth below.
[1] A resin member having a substantially flat plate shape, wherein
   the resin member has a density of not less than 50 kg/m³ and not more than 250 kg/m³, and
   when an amount of indentation, in units of mm, of the resin member upon application of a load to the resin member in a parallel direction to a thickness direction of the resin member by cylindrical stainless steel SUS304 having a diameter of 6 mm and a mass of 3 kg is defined as Dh0, Dh0 is less than 7.5 mm.
[2] The resin member according to [1], wherein in a photograph of a 0.25 mm × 0.25 mm field of view captured at ×500 magnification by an electron microscope such that a thickness direction central position of the resin member is at a center of the field of view and an up/down direction of the field of view corresponds to the thickness direction of the resin member, a number of continuous resin struts surrounding cell membranes is 0 or 1.
[3] The resin member according to [1] or [2], wherein the resin member is at least one selected from the group consisting of a phenolic resin, a urethane resin, and a styrene resin.
[4] The resin member according to any one of [1] to [3], wherein the resin member is a phenolic resin.
[5] A vacuum insulation panel comprising:
   a sealed bag; and
   the resin member according to any one of [1] to [4], sealed under a reduced pressure state inside of the bag.
[6] The vacuum insulation panel according to [5], wherein the vacuum insulation panel has a density of not less than 60 kg/m³ and not more than 260 kg/m³.
[7] The vacuum insulation panel according to [5] or [6], wherein the vacuum insulation panel has a thermal conductivity in a 23°C environment of 0.010 W/(m·K) or less.
[8] The vacuum insulation panel according to any one of [5] to [7], wherein the vacuum insulation panel has a surface smoothness level of 1.8 mm or less.
[9] The vacuum insulation panel according to any one of [5] to [8], wherein when an amount of indentation, in units of mm, of the vacuum insulation panel upon application of a load to the vacuum insulation panel in a parallel direction to the thickness direction of the resin member by cylindrical stainless steel SUS304 having a diameter of 6 mm and a mass of 5 kg is defined as Dh1, Dh1 is less than 7.5 mm.

### (Advantageous Effect)

According to the present disclosure, it is possible to provide a vacuum insulation panel having a good surface smoothness level and excellent thickness direction strength as a vacuum insulation panel, and also to provide a core material for this vacuum insulation panel.

### BRIEF DESCRIPTION OF THE DRAWINGS

In the accompanying drawings:
FIG. 1 is a perspective view schematically illustrating a resin member of Example 1;
FIG. 2 is a perspective view schematically illustrating a vacuum insulation panel of Example 1;
FIG. 3 is a plan view schematically illustrating the vacuum insulation panel of Example 1;
FIG. 4 is a side view schematically illustrating a cross-section of the vacuum insulation panel of Example 1;
FIG. 5 is a plan view schematically illustrating a vacuum insulation panel of Example 4;
FIG. 6 is a photograph of a 0.25 mm × 0.25 mm field of view captured at ×500 magnification by an electron microscope such that a thickness direction central position of a resin member raw material (resin foam prior to cell destruction) of Example 1 is at the center of the field of view and an up/down direction of the field of view corresponds to the thickness direction of the resin member;
FIG. 7 is a photograph of a 0.25 mm × 0.25 mm field of view captured at ×500 magnification by an electron microscope such that a thickness direction central position of the resin member of Example 1 is at the center of the field of view and an up/down direction of the field of view corresponds to the thickness direction of the resin member;
FIG. 8 is a photograph of a 0.25 mm × 0.25 mm field of view captured at ×500 magnification by an electron microscope such that a thickness direction central position of a resin member of Comparative Example 1 is at the center of the field of view and an up/down direction of the field of view corresponds to the thickness direction of the resin member;
FIG. 9 is a photograph where continuous resin struts surrounding cell membranes have been indicated in the photograph of FIG. 8; and
FIG. 10 is a schematic view of one example of a measurement apparatus for Dh0.

### DETAILED DESCRIPTION

The following provides a detailed description of an embodiment of the present disclosure (hereinafter, referred to as the "present embodiment"). Note that the present disclosure is not limited to the following embodiment and can be implemented with various modifications made within the scope of the essence thereof.

With regard to a resin member according to the present embodiment, methods described in the EXAMPLES section are used to determine the density; the percentage of closed cells; the amount of indentation of the resin member upon application of a load to the resin member in a parallel direction to a thickness direction of the resin member by cylindrical stainless steel SUS304 having a diameter of 6 mm and a mass of 3 kg; and the substantial presence or absence of a cellular structure at a thickness direction central position of the resin member (i.e., the number of continuous resin struts surrounding cell membranes in a photograph of a 0.25 mm × 0.25 mm field of view captured at ×500 magnification by an electron microscope); and with regard to a vacuum insulation panel of the present embodiment, methods described in the EXAMPLES section are used to determine the thermal conductivity in a 23°C environment; the density; the surface smoothness level; and the amount of indentation of the vacuum insulation panel upon application of a load to the vacuum insulation panel in a parallel direction to a thickness direction of a resin member by cylindrical stainless steel SUS304 having a diameter of 6 mm and a mass of 5 kg.

### (Resin member)

The resin member of the present embodiment is a resin member having a substantially flat plate shape, wherein
the resin member has a density of not less than 50 kg/m³ and not more than 250 kg/m³, and
when an amount of indentation (mm) of the resin member upon application of a load to the resin member in a parallel direction to a thickness direction of the resin member by cylindrical stainless steel SUS304 having a diameter of 6 mm and a mass of 3 kg is defined as Dh0, Dh0 is less than 7.5 mm.

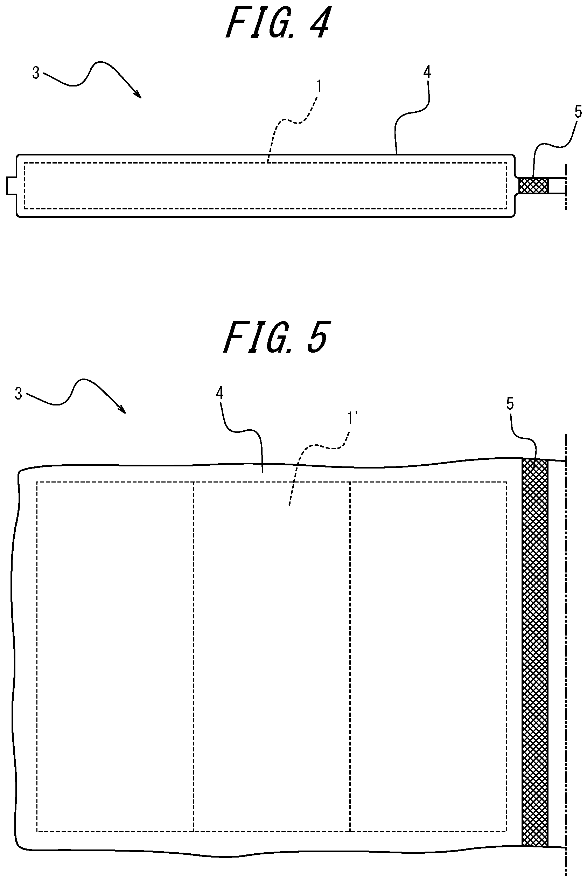

FIG. 4 is a side view schematically illustrating a cross-section of a vacuum insulation panel of Example 1 described further below. In this example, a vacuum insulation panel 3 is obtained by covering a resin member 1 using a highly airtight bag-shaped film 4, subsequently evacuating air therefrom, and then sealing the bag-shaped film through airtight bonding of a heat seal section 5.

The resin member referred to in the present embodiment is a solid member that is formed from a resin. The resin member may be a homogeneous resin or may uniformly or non-uniformly contain a gas such as air, and no stipulation is made as to whether or not a surface material is attached thereto. Furthermore, the resin member may contain a binder, a coating agent, or the like, and no stipulations are made as to the form of processing thereof. Also, additives, etc. other than a main component of the resin member may be contained in the resin member. Note that a raw material used to produce the resin member is referred to as a resin member raw material.

The shape of the resin member is a substantially flat plate shape. For example, the substantially flat plate shape may be a cuboid, a prism, a disk, or the like. The term "rough cuboid" as used in the present embodiment means that faces forming the cuboid are not necessarily flat surfaces, and this term also encompasses cuboids where the faces are curved surfaces, cuboids where faces are joined by a curved surface, and cuboids where corners are curved surfaces.

The density of the resin member of the present embodiment is not less than 50 kg/m³ and not more than 250 kg/m³, preferably not less than 80 kg/m³ and not more than 170 kg/m³, more preferably not less than 90 kg/m³ and not more than 160 kg/m³, even more preferably not less than 100 kg/m³ and not more than 150 kg/m³, and most preferably not less than 110 kg/m³ and not more than 140 kg/m³. When the density of the resin member is 50 kg/m³ or more, the resin member is not easily indented when a load is applied to the resin member in a perpendicular direction relative to the thickness direction, which means that when this resin member is used as a core material of a vacuum insulation panel, the surface smoothness level of the vacuum insulation panel is good, mechanical strength such as load strength as a vacuum insulation panel can be ensured, and the occurrence of indentation or damage can be avoided. On the other hand, when the density of the resin member is 250 kg/m³ or less, this means that when this resin member is used as a core material of a vacuum insulation panel, the vacuum insulation panel does not become heavy and has excellent handleability. The thermal conductivity of a vacuum insulation panel is also influenced by the density of the resin member and has an appropriate range.

A feature of the resin member of the present embodiment is that it has a small amount of indentation (mm) upon application of a load in a parallel direction to the thickness direction of the resin member by cylindrical stainless steel SUS304 having a diameter of 6 mm and a mass of 3 kg. In other words, when Dh0, which is defined as this amount of indentation, is less than 7.5 mm, the resin member tends not to be deformed and experience loss of performance even upon impact in the thickness direction thereof during handling, such as during on-site installation of a vacuum insulation panel having this resin member as a core material. Dh0 is preferably less than 6 mm, more preferably less than 4 mm, even more preferably less than 2.5 mm, and most preferably less than 1.5 mm. Dh0 may be 0 mm or more, for example. The thickness direction is the direction of a distance between two faces that are two opposing faces of the resin member having a substantially flat plate shape that are separated by a smallest distance. Note that in a situation in which the cylindrical material pierces through the resin member in this evaluation, Dh0 is determined by performing evaluation once again with a plurality of sheets of the resin member stacked on one another.

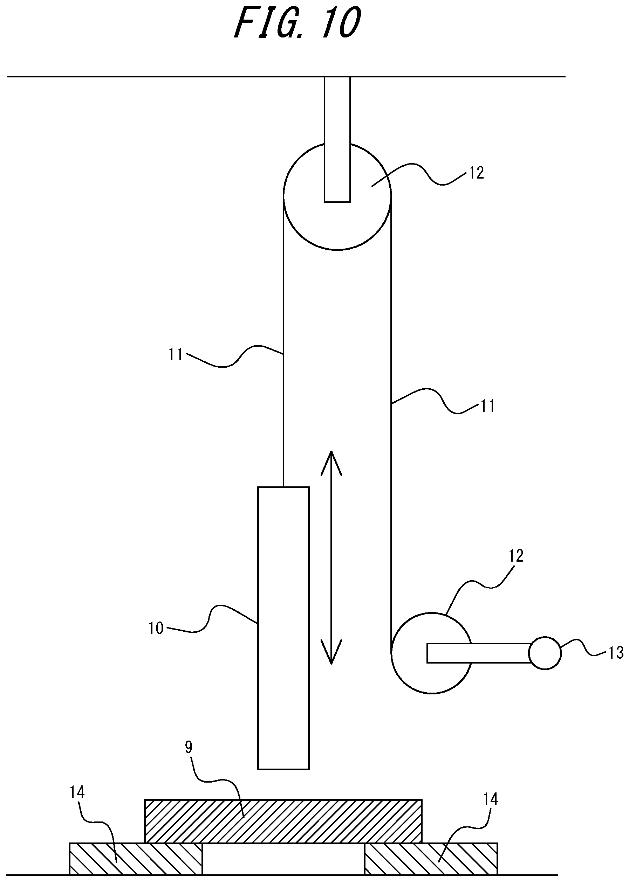

FIG. 10 is a schematic view of one example of a measurement apparatus for Dh0. A resin member 9 is placed on two wood pieces 14, which are arranged in parallel with an interval of 20 mm therebetween, such that a section where the resin member 9 and each wood piece 14 overlap is at least 5 mm. Above the resin member, cylindrical stainless steel SUS304 (reference sign 10) having a diameter of 6 mm and a mass of 3 kg is suspended by a wire 11 that can be moved upward and downward using a pulley 12 through rotation of a position adjustment handle 13.

Stainless steel SUS304 corresponds to X5CrNi18-10 (4301-304-00-I) of ISO standards.

In a situation in which fibers are used as a core material, the thickness of the material under atmospheric pressure is large relative to the thickness thereof under reduced pressure (i.e., there is a large thickness change), which results in poor operability in a process of loading the material into a highly airtight bag to produce a vacuum insulation panel. More specifically, operability is poor because (1) an operation of inserting a fibrous core material having a large thickness under atmospheric pressure into a bag having a small thickness (gusset) is difficult and (2) when the fibrous core material is inserted into the bag and then the pressure is reduced, it is easy for unevenness to arise at the surface of the bag and bending of the bag to occur, for example. In view of the above, it is generally desirable to use a material formed of a resin foam (resin member raw material) as a core material of a vacuum insulation panel rather than fibers resulting in a large thickness difference between the core material and the vacuum insulation panel.

In addition, the inventors found it to be preferable that in a photograph of a 0.25 mm × 0.25 mm field of view of the resin member of the present embodiment captured at ×500 magnification by an electron microscope such that a thickness direction central position of the resin member (half-thickness position) is at the center of the field of view and an up/down direction of the field of view corresponds to the thickness direction of the resin member, the number of continuous resin struts surrounding cell membranes is 0 or 1 (this is also referred to as "not substantially having a cellular structure").

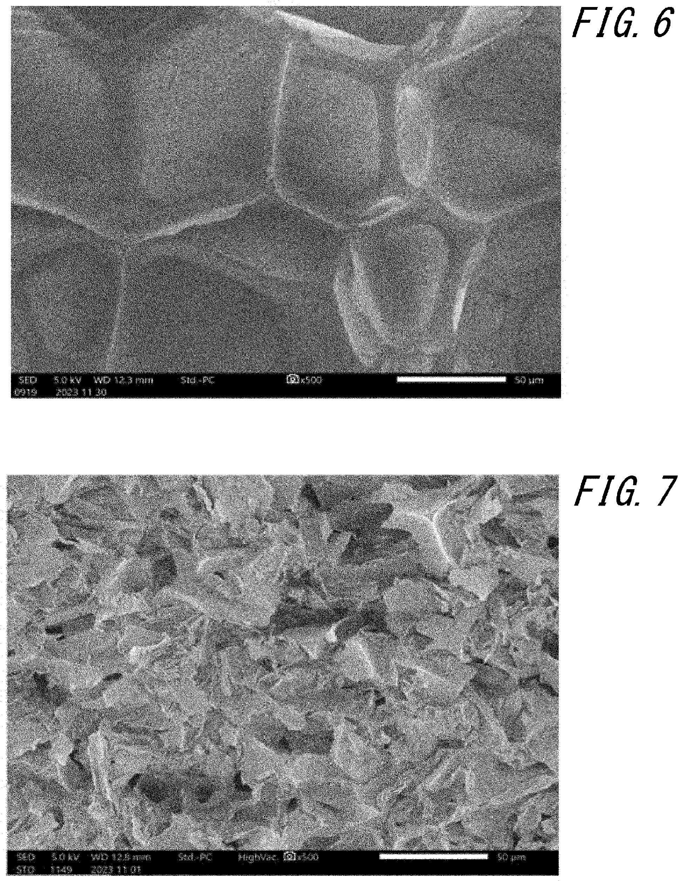

The field of view referred to here is a 0.25 mm × 0.25 mm region that is captured at ×500 magnification by an electron microscope. A section where information such as the magnification and a scale bar is indicated at the bottom of a photograph such as FIG. 7 is not included in the field of view because it is not in the photographed region.

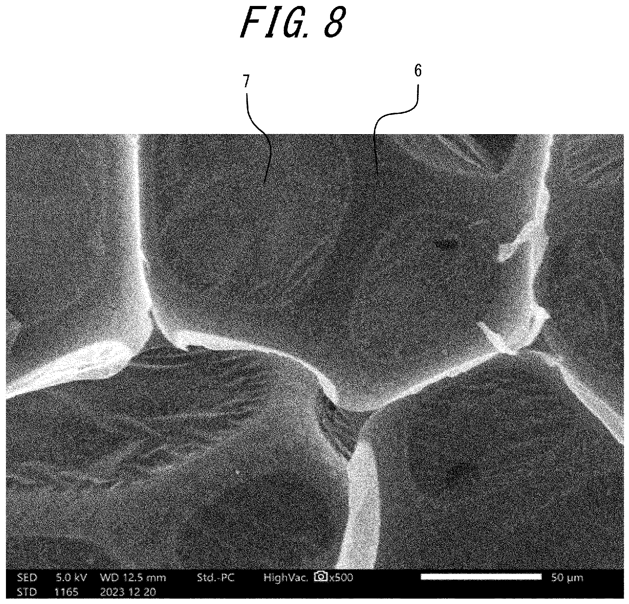

FIG. 8 is a photograph of a 0.25 mm × 0.25 mm field of view of a resin member of Comparative Example 1 captured at ×500 magnification by an electron microscope such that a thickness direction central position of the resin member is at the center of the field of view and an up/down direction of the field of view corresponds to the thickness direction of the resin member. Ac ell membrane 7 that is surrounded by a cell strut 6 can be observed in the photograph of FIG. 8. Note that the cell strut 6 is a resin strut forming a foam and that the cell membrane 7 refers to a resin membrane that is surrounded by the resin strut.

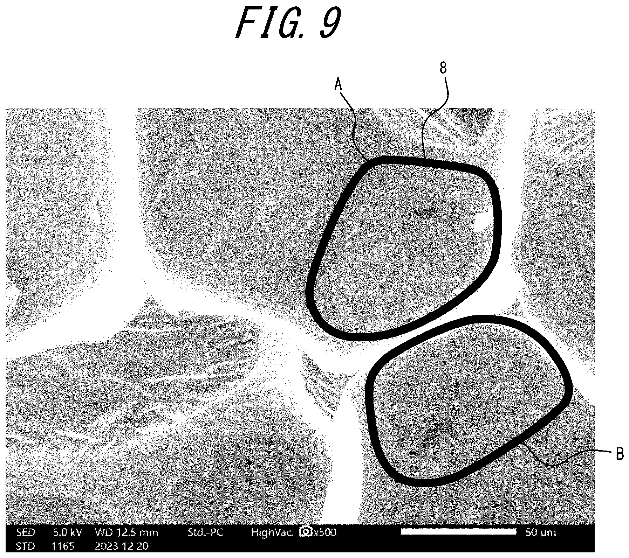

FIG. 9 is a photograph in which continuous resin struts surrounding cell membranes have been indicated in the photograph of FIG. 8 in order to evaluate the substantial presence or absence of a cellular structure. A and B around which black lines are circumscribed indicate continuous resin struts surrounding cell membranes. Accordingly, the number of continuous resin struts surrounding cell membranes in the photographs of FIG. 8 and FIG. 9 is 2 (A and B).

FIG. 7 is a photograph of a 0.25 mm × 0.25 mm field of view of a resin member of Example 1 captured at ×500 magnification by an electron microscope such that a thickness direction central position of the resin member is at the center of the field of view and an up/down direction of the field of view corresponds to the thickness direction of the resin member. In this photograph, the number of continuous resin struts surrounding cell membranes is 0.

It is preferable for the resin member to not substantially have a cellular structure at the thickness direction central position because in a situation in which such a resin member is used as a core material of a vacuum insulation panel, it is easy to achieve sufficient strength of the vacuum insulation panel, the surface smoothness level is good, and the resin member is not easily indented upon application of a load in a perpendicular direction relative to the thickness direction.

Although no limitations are placed on the presence or absence of a cellular structure at sites other than the thickness direction central position, it is more preferable for the resin member to not substantially have a cellular structure at such sites in the same manner as at the thickness direction central position because this makes it easier to achieve improvement of surface smoothness and improvement of thickness direction strength, and also because it is easier to reduce the thermal conductivity of a vacuum insulation panel in which such a resin member is used as a core material.

The size of the resin member can be set as appropriate according to the object. In the case of a rough cuboid shape, the length of one side other than in the thickness direction is preferably not less than 30 mm and not more than 6,000 mm, more preferably not less than 50 mm and not more than 3,000 mm, even more preferably not less than 100 mm and not more than 2,000 mm, and most preferably not less than 200 mm and not more than 1,200 mm. Moreover, the thickness of the resin member is preferably not less than 1 mm and not more than 120 mm, more preferably not less than 2 mm and not more than 80 mm, even more preferably not less than 3 mm and not more than 50 mm, and most preferably not less than 5 mm and not more than 50 mm.

Although no specific limitations are placed on the percentage of closed cells of the resin member of the present embodiment, the percentage of closed cells may be 10% or less, preferably 5% or less, more preferably 1% or less, even more preferably 0.5% or less, and most preferably 0%, for example. When the percentage of closed cells of the resin member is 5% or less, Dh0 can be reduced, and in the case of a resin foam, it is possible to reduce the amount of gas that is encapsulated in cells, thereby suppressing rather than utilizing thermal conduction of encapsulated gas. Consequently, when such a resin member is used as a core material of a vacuum insulation panel, thermal conductivity of the vacuum insulation panel can be reduced.

No specific limitations are placed on the material of the resin member of the present embodiment, and a phenolic resin; polystyrene; a polyolefin such as polyethylene or polypropylene; polyacrylate; vinyl chloride; polyurethane; or the like can be adopted. Moreover, the resin member may be obtained through an operation such as compression of a foam. In particular, a phenolic resin foam, rigid urethane resin foam, and polystyrene resin foam having a cellular structure that is easily destroyed by an excessive compression operation are preferable, of which, a phenolic resin foam that is a highly brittle material is more preferable. These resin foams are preferably compressed such as to substantially eliminate the cellular structure at a thickness direction central position. In the case of a foam having a surface material attached such as a phenolic resin, the resin member may be a member equipped with the surface material or may be a member from which the surface material has been removed.

In one embodiment, the resin member is at least one selected from the group consisting of a phenolic resin, a urethane resin, and a styrene resin. In another embodiment, the resin member is a phenolic resin.

In one embodiment of the resin member, the thickness of the resin member under reduced pressure (130 Pa) is 50% to 100% of the thickness thereof under atmospheric pressure.

One or a plurality of scraps (offcuts) of a resin foam can be used as the resin member raw material of the present embodiment. No limitations are placed on the method by which a plurality of scraps are combined, and it may be the case that scraps of the same thickness are arranged in a perpendicular direction relative to the thickness direction or that scraps are stacked on one another in the thickness direction. Although this means that the resin member is also composed of one or a plurality of scraps of a resin foam in this case, even when these are used as a core material of a vacuum insulation panel, the reduced pressure inside of a highly airtight bag-shaped film that covers the resin member makes it possible to achieve a unified member through increased close adherence between resin members and produce an excellent vacuum insulation panel.

The resin member of the present embodiment can mainly be produced as follows. A resin foam of a desired size is prepared, the resin foam is uniformly pressed over the entire area of upper and lower surfaces thereof in a thickness direction to destroy cells, and an encapsulated blowing agent is dissipated simultaneously with pressing (compression) in a case in which a resin foam is used as the raw material while also causing reduction of thickness (volume reduction) of the resin foam. In this manner, a resin member that does not substantially have a cellular structure at a thickness direction central position is preferably obtained. The method of uniform pressing over the entire area of upper and lower surfaces in the thickness direction can be a method using a roller-type pressing machine or the like, though no specific limitations are made. Note that a value obtained by dividing the thickness of the obtained resin member by the thickness of the resin member raw material is defined as a volume reduction ratio.

FIG. 6 is a photograph of a 0.25 mm × 0.25 mm field of view of a resin member raw material (resin foam prior to cell destruction) of Example 1 described further below captured at ×500 magnification by an electron microscope such that a thickness direction central position of the resin member raw material is at the center of the field of view and an up/down direction of the field of view corresponds to the thickness direction of the resin member.

The resin member of the present embodiment can be made into a vacuum insulation panel by covering the resin member using a highly airtight bag-shaped film, subsequently evacuating air therefrom, and then sealing the bag-shaped film through airtight bonding.

### (Vacuum insulation panel)

The vacuum insulation panel of the present embodiment is a vacuum insulation panel that includes:
a sealed bag; and
any one of the resin members described above, sealed under a reduced pressure state inside of the bag.

The resin member that is disposed inside of the bag in the vacuum insulation panel is the resin member set forth above, and description thereof is omitted.

The vacuum insulation panel of the present embodiment preferably has a thermal conductivity in a 23°C environment of 0.010 W/(m·K) or less. The thermal conductivity in a 23°C environment is preferably 0.009 W/(m·K) or less, more preferably 0.008 W/(m·K) or less, even more preferably 0.007 W/(m·K) or less, and most preferably 0.006 W/(m·K) or less. When the thermal conductivity in a 23°C environment of the vacuum insulation panel is 0.01 W/(m·K) or less, high insulating performance can be achieved even with a thin vacuum insulation panel.

The density of the vacuum insulation panel of the present embodiment may be not less than 60 kg/m³ and not more than 260 kg/m³, preferably not less than 70 kg/m³ and not more than 200 kg/m³, more preferably not less than 85 kg/m³ and not more than 175 kg/m³, even more preferably not less than 110 kg/m³ and not more than 170 kg/m³, and most preferably not less than 125 kg/m³ and not more than 155 kg/m³, for example. When the density of the vacuum insulation panel is 60 kg/m³ or more, mechanical strength such as load strength can be ensured, and destruction of the vacuum insulation panel can be avoided. On the other hand, when the density of the vacuum insulation panel is 260 kg/m³ or less, the vacuum insulation panel does not become heavy and has excellent handleability. The thermal conductivity of the vacuum insulation panel is also influenced by the density of the resin member and has an appropriate range.

The surface smoothness level of the vacuum insulation panel of the present embodiment may be 1.8 mm or less, preferably 1.5 mm or less, more preferably 1.1 mm or less, even more preferably 0.9 mm or less, and most preferably 0.8 mm or less, for example. Note that when the surface smoothness level of the vacuum insulation panel is 1.8 mm or less, highly airtight installation exploiting this surface smoothness can be achieved in use, and handleability of the vacuum insulation panel is also excellent.

For the vacuum insulation panel of the present embodiment, it is preferable that when an amount of indentation (mm) of the vacuum insulation panel upon application of a load to the vacuum insulation panel in a parallel direction to a thickness direction of the resin member or the vacuum insulation panel by cylindrical stainless steel SUS304 having a diameter of 6 mm and a mass of 5 kg is defined as Dh1, Dh1 is less than 7.5 mm. When Dh1 is less than 7.5 mm, the vacuum insulation panel tends not to be deformed and experience loss of performance even upon impact in the thickness direction during handling, such as during on-site installation. Dh1 is preferably less than 6.0 mm, more preferably less than 4.0 mm, even more preferably less than 2.5 mm, and most preferably less than 1.5 mm. Dh1 may be 0 mm or more, for example. Note that even in a situation in which the highly airtight film bag that is present at the skin of the vacuum insulation panel is ruptured in this evaluation, this is evaluated as the amount of indentation. Also note that in a situation in which the cylindrical material pierces through the vacuum insulation panel in this evaluation, Dh1 is determined by performing evaluation once again with a plurality of sheets of the vacuum insulation panel stacked on one another.

No specific limitations are placed on the highly airtight bag-shaped film that covers the resin member used to produce the vacuum insulation panel, and the material, size, thickness, and so forth of the bag-shaped film can be selected as appropriate according to the object. A preferable example of the film is a laminated film, and particularly a multilayer laminated film including a metal (for example, aluminum) layer that has been vapor deposited or laminated. Examples of suitable films include polyester; polyvinyl chloride; polyolefins such as polyethylene and polypropylene; and polyvinyl alcohol.

The size of the vacuum insulation panel is influenced by the size of the resin member but can be set as appropriate depending on the object. In the case of a rough cuboid shape, the length of one side other than in the thickness direction is preferably not less than 30 mm and not more than 6,010 mm, more preferably not less than 50 mm and not more than 3,010 mm, even more preferably not less than 100 mm and not more than 2,010 mm, and most preferably not less than 200 mm and not more than 1,210 mm. Moreover, the thickness of the vacuum insulation panel is preferably not less than 1 mm and not more than 120 mm, more preferably not less than 2 mm and not more than 80 mm, even more preferably not less than 3 mm and not more than 50 mm, and most preferably not less than 5 mm and not more than 50 mm.

The shape of the vacuum insulation panel is influenced by the shape of the resin member but can be any shape without any specific limitations. For example, the shape may be a cuboid (for example, a plate shape, layer shape, or sheet shape), a prism, a cylinder, a disk, or a polyhedron other than a cuboid (for example, a regular polyhedron such as a regular tetrahedron, a regular octahedron, a regular dodecahedron, or a regular icosahedron). The term "rough cuboid" as used in the present embodiment means that faces forming the cuboid are not necessarily flat surfaces, and this term also encompasses cuboids where the faces are curved surfaces, cuboids where faces are connected by a curved surface, and cuboids where corners are curved surfaces.

The method by which the bag-shaped film is closed can be a commonly known means such as heat sealing, for example, without any specific limitations. The resin member should be enclosed by the bag-shaped film, and the film is closed by airtight bonding after evacuation of air from inside of the bag-shaped film where the resin member is accommodated. Note that a material to which moisture and other gases adsorb such as a getter may be attached or inserted inside of the bag as appropriate.

The vacuum insulation panel is obtained by accommodating the resin member inside of the bag-shaped film, subsequently reducing the pressure inside of the bag-shaped film, and then sealing the bag-shaped film by a means such as heat sealing. In the above, the pressure inside of the bag-shaped film may be not less than 1 Pa and not more than 1,000 Pa, preferably not less than 5 Pa and not more than 500 Pa, and even more preferably not less than 10 Pa and not more than 200 Pa, for example. By setting the pressure inside of the bag-shaped film as 1,000 Pa or less, the thermal conductivity at 23°C of the obtained vacuum insulation panel can be reduced. Moreover, by setting the pressure as 1 Pa or more, damage of the bag-shaped film caused by the pressure difference with atmospheric pressure can be prevented.

### EXAMPLES

T he following provides an even more detailed description of the present disclosure through examples and comparative examples, but the present disclosure is not limited thereby.

### (Examples 1 to 3, Examples 5 to 8, Example 11, and Comparative Example 2)

### <Production of resin member raw materials A to E and J>

A phenolic resin foam (resin member raw material A) of 45 mm in thickness was obtained in the same way as in production of a phenolic resin foam in Example 1 of JP 2021-192962 A with the exception that the number of parts of a blowing agent was set as 4.5 parts by mass. When the density and percentage of closed cells of the phenolic resin foam were measured by subsequently described methods, the density was 30 kg/m³ and the percentage of closed cells was 93%.

Phenolic resin foams that were obtained in the same manner but with adjustment of the number of parts of a blowing agent, an acidic curing agent, the height of a free roller in a preliminary molding step, and the temperature in a main molding step were each subjected to 4 hours of curing under a condition of 120°C to obtain resin member raw materials B to E and J that are indicated in Table 1.

### <Production of resin members A1 to A3, B1 to E1, E2, and J1>

A resin member raw material was subjected to volume reduction by a roller compression device to obtain a resin member. This roller compression device is composed of a feeding table and a roller compression device and is capable of compression resulting in a volume reduction ratio of 0.1 to 0.9 by loading the resin member raw material between an upper roller (hydraulic cylinder lifting type) and a fixed lower roller and causing the resin member raw material to travel at a fixed speed while applying pressing force between the two rollers. Resin members A1 to A3, B1 to E1, E2, and J1 indicated in Table 1 were obtained by adjusting the type (thickness) of the resin member raw material and the interval between the upper and lower rollers. The density, percentage of closed cells, Dh0, and number of continuous resin struts surrounding cell membranes at a thickness direction central position for these resin members A1 to A3, B1 to E1, E2, and J1 are shown in Table 2.

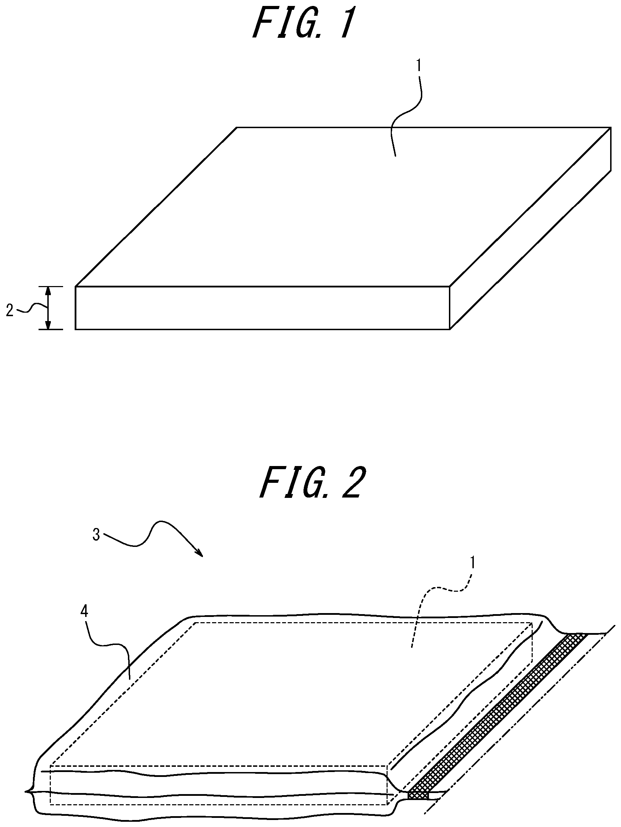

FIG. 1 presents a perspective view schematically illustrating a resin member of Example 1. Note that reference sign 2 in FIG. 1 is the thickness of the resin member 1.

### <Production of vacuum insulation panels A1S to A3S, B1S to E1S, E2S, and J1S>

Vacuum insulation panels A1S to A3S, B1S to E1S, E2S, and J1S were obtained by adjusting each of the resin members A1 to A3, B1 to E1, E2, and J1 to a size of 270 mm × 270 mm, accommodating the resin member inside of an aluminum bag (polyethylene terephthalate/aluminum foil/polyethylene-deposited bag) produced by Mitsubishi Gas Chemical Company, Inc. (standard AB350500PL; 350 mm × 500 mm), subsequently reducing the pressure inside of the aluminum bag to 130 Pa using an FVCII-G "Vacuum Packaging Machine" produced by Furukawa Mfg., and then sealing an opening of the aluminum bag by heat sealing.

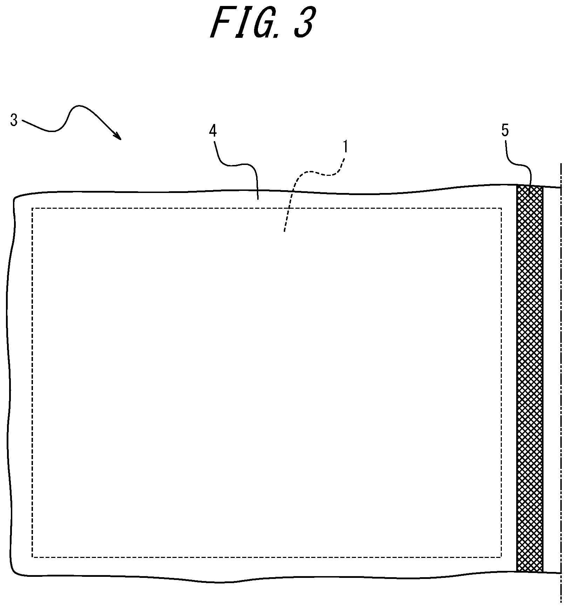

FIG. 2 presents a perspective view schematically illustrating a vacuum insulation panel of Example 1. A resin member 1 is accommodated in a highly airtight bag-shaped film bag 4 of a vacuum insulation panel 3. Moreover, FIG. 3 presents a plan view schematically illustrating the vacuum insulation panel of Example 1.

### (Example 4)

### <Production of resin member A4>

A resin member A1 was obtained in the same way as in Example 1. Three pieces having a size of 90 mm × 270 mm (one of which is designated as resin member 1') were cut out from the resin member A1 so as to obtain three test pieces A1(1) to A1(3). These three test pieces are denoted collectively as A4. The density, percentage of closed cells, Dh0, and number of continuous resin struts surrounding cell membranes at a thickness direction central position were evaluated for each of A1(1) to A1(3), and an average value for A1(1) to A1(3) was determined as the density of A4, the percentage of closed cells of A4, and Dh0 of A4. Since a cellular structure was substantially absent in each of A1(1) to A1(3) after evaluation of the number of continuous resin struts surrounding cell membranes at the thickness direction central position, the evaluation result for A4 was taken to be "0". The results are shown in Table 2.

### <Production of vacuum insulation panel A4S>

The three test pieces A1(1) to A1(3) were arranged in a perpendicular direction relative to the thickness direction such as to have an apparent size of 270 mm × 270 mm, were subsequently accommodated inside of an aluminum bag produced by Mitsubishi Gas Chemical Company, Inc. (standard AB350500PL; 350 mm × 500 mm), and then the pressure inside of the aluminum bag was reduced to 130 Pa using an FVCII-G "Vacuum Packaging Machine" produced by Furukawa Mfg. An opening of the aluminum bag was subsequently sealed by heat sealing to obtain a vacuum insulation panel A4S.

FIG. 5 presents a plan view schematically illustrating the vacuum insulation panel of Example 4.

### (Example 9)

### <Production of resin member F1>

A resin member F1 was obtained in the same way as in Example 1 using "Q1 Board, 30 mm" produced by Achilles Corporation as a resin member raw material. The density, percentage of closed cells, Dh0, and number of continuous resin struts surrounding cell membranes at a thickness direction central position were determined for F1. The results are shown in Table 2.

### <Production of vacuum insulation panel F1S>

A vacuum insulation panel F1S was obtained for the resin member F1 by performing operations in the same way as in Example 1 with the exception of the resin member that was used.

### (Example 10)

### <Production of resin member G1>

A resin member G1 was obtained in the same way as in Example 1 using "Styrofoam^{®} IB (Styrofoam is a registered trademark in Japan, other countries, or both), 30 mm" produced by DuPont Styro as a resin member raw material. The density, percentage of closed cells, Dh0, and number of continuous resin struts surrounding cell membranes at a thickness direction central position were determined for G1. The results are shown in Table 2.

### <Production of vacuum insulation panel G1S>

A vacuum insulation panel G1S was obtained for the resin member G1 by performing operations in the same way as in Example 1 with the exception of the resin member that was used.

### (Comparative Example 1)

### <Production of resin member raw material H>

A phenolic resin foam (resin member raw material H) of 35 mm in thickness was obtained in the same way as in production of a phenolic resin foam in Example 1 of JP 2021-192962 A with the exception that a composition containing an ethylene oxide-propylene oxide block copolymer and polyoxyethylene dodecyl phenyl ether in a mass ratio of 50% each, serving as a surfactant, was set as 1.0 parts relative to 100 parts by mass of phenolic resin, 3.5 parts of 8032 Additive produced by Dow Toray Co., Ltd. was added, and the water content was set as 9%. The density was 33 kg/m³, and the percentage of closed cells was 4.1%.

### <Production of resin member H1>

The resin member raw material H was used in that form as a resin member (resin member denoted as H1) without performing volume reduction by a roller compression device. The density, percentage of closed cells, Dh0, and substantial presence or absence of a cellular structure at a thickness direction central position for this resin member H1 are shown in Table 2.

### <Production of vacuum insulation panel H1S>

A vacuum insulation panel H1S was obtained for the resin member H1 by performing operations in the same way as in Example 1 with the exception of the resin member that was used.

### (Comparative Example 3)

### <Production of resin member raw material K>

A phenolic resin foam (resin member raw material K) of 35 mm in thickness was obtained in the same way as in production of a phenolic resin foam in Example 1 of JP 2021-192962 A with the exception that a composition containing an ethylene oxide-propylene oxide block copolymer and polyoxyethylene dodecyl phenyl ether in a mass ratio of 50% each, serving as a surfactant, was set as 1.75 parts relative to 100 parts by mass of phenolic resin, and 1.75 parts of 8032 Additive produced by Dow Toray Co., Ltd. was added. When the density and percentage of closed cells of the phenolic resin foam were measured by subsequently described methods, the density was 31 kg/m³ and the percentage of closed cells was 62%. The obtained phenolic resin foam was taken to be a resin member raw material K.

### <Production of resin member K1>

A resin member K1 was obtained in the same way as in Example 1 using the resin member raw material K. The density, percentage of closed cells, Dh0, and substantial presence or absence of a cellular structure at a thickness direction central position for K1 are shown in Table 2.

### <Production of vacuum insulation panel K1S>

A vacuum insulation panel K1S was obtained for the resin member K1 by performing operations in the same way as in Example 1 with the exception of the resin member that was used.

### <Density of resin member raw material>

A resin member raw material of 200 mm-square was used as a sample, and its mass and apparent volume were measured in accordance with JIS K7222 to determine the density of the resin member raw material. In a case in which the resin member raw material was smaller than 200 mm, the resin member raw material was adjusted to an appropriate size, the mass and apparent volume were measured, and the density was determined. Note that in a case in which a plurality of resin member raw materials are used, densities determined through evaluation of these resin member raw materials are averaged, and the average is defined as the "density of the resin member raw material".

### <Density of resin member>

A resin member was taken as a sample, and the mass of this sample was first measured. Next, in order to measure the volume, three sides of a substantially flat plate shape were each measured at four points, an average was determined for each side, and then the volume of the substantially flat plate shape was determined. Note that measurement of each side is performed using a ruler rather than using calipers in order that the sample is not pressed because, depending on the sample, pressing of the sample alters the thickness and also the volume. The mass was divided by the volume to determine the density of the resin member. Note that in a case in which a plurality of resin members are used, densities determined through evaluation of these resin members are averaged, and the average is defined as the "density of the resin member".

### <Percentage of closed cells>

The percentage of closed cells of a resin member was measured in accordance with ASTM-D-2856 (Procedure C). Specifically, after removing a surface material from a resin member in the case of a sample having a surface material attached, five rough cubes having a side length of about 1 cm were cut out such as to include a thickness direction central position of the resin member, and the sample volume was measured using an air comparison pycnometer (produced by Tokyo Science Co., Ltd.; model 1000). Moreover, the volume of cell walls (cell struts and cell membranes) was calculated from the sample mass and the density of the resin member. Furthermore, the apparent volume was calculated from external dimensions of the sample. A value obtained by subtracting the volume of cell walls (cell struts and cell membranes) from the sample volume was divided by the apparent volume to determine a value that was defined as the percentage of closed cells. The density of phenolic resin was taken to be 1.3 kg/L. In the case of a resin other than a phenolic resin, a suitable value for the density is adopted after appropriately checking the material. Note that in a case in which a plurality of resin members are used, percentages of closed cells determined through evaluation of these resin members are averaged, and the average is defined as the "percentage of closed cells of the resin member".

### <Amount of indentation upon load application; Dh0>

Calipers were used to measure the thickness of a resin member at four positions that were 20 mm inward from four corners of the resin member, and an average value of the measured thicknesses was defined as the thickness of the resin member. The sample was subsequently arranged on a smooth surface such that the thickness direction thereof corresponded to an up/down direction. Moreover, as illustrated in FIG. 10, a sample 9 was placed on two wood pieces 14, which were arranged in parallel with an interval of 20 mm therebetween, such that a section where the resin member 9 and each wood piece 14 overlapped was at least 5 mm, cylindrical stainless steel SUS304 (reference sign 10) having a diameter of 6 mm and a mass of 3 kg was suspended from above by a wire 11 that could be moved upward and downward using a pulley 12 from above through rotation of a position adjustment handle 13, and the stainless steel 10 was slowly lowered onto the sample 9 from above at a position corresponding to a midpoint between the two wood pieces 14 having the interval of 20 mm therebetween. Once the stainless steel 10 was free standing on the sample with the wire 11 in a slack state, the stainless steel 10 was held thereat for 30 seconds. Thereafter, the wire 11 was pulled upward, and the amount of indentation of the sample 9 was measured using calipers. For two samples 9, an upper surface side of one sample and a lower surface side of the other sample were measured (i.e., a total of two locations were measured), and an average value thereof was determined as Dh0 (mm). Note that in a case in which a plurality of resin members are used, amounts of indentation determined through evaluation of these resin members are averaged, and the average is defined as "Dh0".

### <Number of continuous resin struts surrounding cell membranes at thickness direction central position>

Measurement of thickness was performed with respect to a resin member (or in the case of a vacuum insulation panel, with respect to a core material thereof). In a photograph of a 0.25 mm × 0.25 mm field of view captured at ×500 magnification by an electron microscope such that a thickness direction central position (half-thickness position) is at the center of the field of view and an up/down direction of the field of view corresponds to the thickness direction of the resin member, all continuous resin struts surrounding cell membranes in the field of view are counted. The same operation is then performed a further three times in photographs of other sites, and thus a total of four measurements are made. A largest value among the four measurements is evaluated as the "number of continuous resin struts surrounding cell membranes". Note that the cell membrane may be ruptured or have a hole formed therein. Also note that in a case in which a plurality of resin members are used, a smallest value among numbers of continuous resin struts surrounding cell membranes that are determined through evaluation of these resin members is defined as "the number of continuous resin struts surrounding cell membranes at a thickness direction central position".

The density, thermal conductivity in a 23°C environment, surface smoothness level, and Dh1 of vacuum insulation panels obtained in the examples and comparative examples were measured. The results are shown in Table 2.

### <Density of vacuum insulation panel>

In the case of a rough cuboid, three sides were each measured at four points using calipers, an average value was determined for each side, and then the volume of the rough cuboid was determined. The volume of a portion where only a bag-shaped film was disposed at the skin was ignored (heat seal section also excluded), and the density was determined as the density of a site where resin sample was located.

### <Thermal conductivity in 23°C environment of vacuum insulation panel>

The thickness direction thermal conductivity of a vacuum insulation panel in a 23°C environment was measured in accordance with JIS A 1412-2:1999 by the following method. The specific procedure is as follows. A test piece of the vacuum insulation panel was placed in an atmosphere of 23 ± 1°C and 50 ± 2% humidity. Once at least 24 hours had passed, the test piece was introduced into a thermal conductivity device that had likewise been placed in an atmosphere of 23 ± 1°C and 50 ± 2% humidity. Measurement of thermal conductivity was performed as the thermal conductivity at 23°C under conditions of a low temperature plate of 13°C and a high temperature plate of 33°C using a single specimen symmetric configuration-type measurement apparatus (produced by EKO Instruments Co., Ltd.; product name: HC-074/FOX304). Note that in the case of measurement of thermal conductivity of a large vacuum insulation panel or an extremely small vacuum insulation panel, an appropriate measurement apparatus can be selected without limitation to the measurement method described above.

### <Surface smoothness level; ΔH>

The thickness of a vacuum insulation panel was measured using calipers. Specifically, for a side in one direction, the thicknesses at 20 different locations including a central portion thereof were measured, and the difference Δhx between a minimum value and a maximum value was determined. The thicknesses at 20 different locations including a central portion were also measured in the same manner for a side orthogonal to the aforementioned side, and the difference Δhy between a minimum value and a maximum value was determined. Thereafter, whichever was larger among Δhx and Δhy was defined as ΔH and was evaluated as the surface smoothness level (mm).

### <Amount of indentation upon load application; Dh1>

Measurement was performed in the same way as in measurement of Dh0 with the exception that cylindrical stainless steel SUS304 having a diameter of 6 mm and a mass of 5 kg was used. For two samples, an upper surface side of one sample and a lower surface side of the other sample were measured (i.e., a total of two locations were measured), and an average value thereof was determined as Dh1 (mm).

**[Table 1]**

| | Resin member raw material | | | Volume reduction ratio (resin member/resin member raw material) | Resin member | Resin member thickness (mm) |
|---|---|---|---|---|---|---|
| | Name | Thickness (mm) | Density (kg/m³) | | | |
| Example 1 | A | 45 | 30 | 0.26 | A1 | 11.7 |
| Example 2 | A | 45 | 30 | 0.38 | A2 | 17.1 |
| Example 3 | A | 45 | 30 | 0.60 | A3 | 27.0 |
| Example 4 | A | 45 | 30 | 0.26 | A4 | 11.7 |
| Example 5 | B | 20 | 27 | 0.53 | B1 | 10.6 |
| Example 6 | C | 55 | 29 | 0.25 | C1 | 13.8 |
| Example 7 | D | 60 | 27 | 0.19 | D1 | 11.4 |
| Example 8 | E | 50 | 40 | 0.22 | E1 | 11.0 |
| Example 9 | F | 30 | 45 | 0.45 | F1 | 13.5 |
| Example 10 | G | 30 | 25 | 0.45 | G1 | 13.5 |
| Example 11 | E | 50 | 40 | 0.70 | E2 | 35.0 |
| Comparative Example 1 | H | 35 | 33 | 1.00 | H1 | 35.0 |
| Comparative Example 2 | J | 20 | 24 | 0.50 | J1 | 10.0 |
| Comparative Example 3 | K | 35 | 31 | 0.62 | K1 | 21.7 |

In Table 1, F indicates rigid urethane resin foam, and G indicates polystyrene resin foam.

**[Table 2]**

| | Resin member | | | | | Vacuum insulation panel | | | | |
|---|---|---|---|---|---|---|---|---|---|---|
| | Resin member name | Density (kg/m³) | Dh0 (mm) | Percentage of closed cells (%) | Number of resin struts | Vacuum insulation panel name | Density (kg/m³) | Thermal conductivity in 23°C environment (W/(m·K)) | Surface smoothness level (ΔH; mm) | Dh1 (mm) |
| Example 1 | A1 | 115 | 1.56 | 0 | 0 | A1S | 135 | 0.0057 | 0.96 | 1.44 |
| Example 2 | A2 | 79 | 1.71 | 0 | 0 | A2S | 101 | 0.0078 | 1.13 | 1.53 |
| Example 3 | A3 | 50 | 3.01 | 5 | 1 | A3S | 79 | 0.0098 | 1.76 | 2.85 |
| Example 4 | A4 | 115 | 1.53 | 0 | 0 | A4S | 137 | 0.0080 | 0.92 | 1.39 |
| Example 5 | B1 | 51 | 2.49 | 0 | 0 | B1S | 67 | 0.0094 | 1.78 | 2.39 |
| Example 6 | C1 | 116 | 1.35 | 0 | 0 | C1S | 121 | 0.0059 | 1.01 | 0.88 |
| Example 7 | D1 | 142 | 1.21 | 0 | 0 | D1S | 155 | 0.0059 | 0.79 | 0.91 |
| Example 8 | E1 | 182 | 0.71 | 0 | 0 | E1S | 192 | 0.0088 | 0.51 | 0.55 |
| Example 9 | F1 | 100 | 0.64 | 10 | 1 | F1S | 195 | 0.0250 | 1.50 | 1.17 |
| Example 10 | G1 | 56 | 1.24 | 63 | 1 | G1S | 72 | 0.0350 | 1.76 | 1.10 |
| Example 11 | E2 | 57 | 7.43 | 68 | 1 | E2S | 86 | 0.0240 | 1.77 | 7.02 |
| Comparative Example 1 | H1 | 33 | 14.41 | 4 | 2 | H1S | 56 | 0.0097 | 1.91 | 13.67 |
| Comparative Example 2 | J1 | 48 | 9.82 | 0 | 1 | J1S | 77 | 0.0091 | 1.79 | 8.60 |
| Comparative Example 3 | K1 | 50 | 8.61 | 11 | 2 | K1S | 81 | 0.0130 | 1.98 | 8.31 |

It can be seen that the vacuum insulation panels and core materials thereof that were obtained in Examples 1 to 11 are vacuum insulation panels and core materials thereof that, compared to the vacuum insulation panels and core materials obtained in Comparative Examples 1 to 3, have a good surface smoothness level and excellent thickness direction strength as a vacuum insulation panel.

### REFERENCE SIGNS LIST

- 1: resin member
- 1': resin member (scraps used)
- 2: thickness of resin member
- 3: vacuum insulation panel
- 4: highly airtight bag-shaped film bag
- 5: heat seal section
- 6: cell strut
- 7: cell membrane
- 8: continuous resin strut surrounding cell membrane
- 9: sample
- 10: cylindrical stainless steel SUS304
- 11: wire
- 12: pulley
- 13: position adjustment handle
- 14: wood piece

### INDUSTRIAL APPLICABILITY

According to the present disclosure, it is possible to provide a vacuum insulation panel having a good surface smoothness level and excellent thickness direction strength as a vacuum insulation panel and also having good installability, and it is also possible to provide a core material for this vacuum insulation panel.

## Claims

1. A resin member having a substantially flat plate shape, wherein
the resin member has a density of not less than 50 kg/m³ and not more than 250 kg/m³, and
when an amount of indentation, in units of mm, of the resin member upon application of a load to the resin member in a parallel direction to a thickness direction of the resin member by cylindrical stainless steel SUS304 having a diameter of 6 mm and a mass of 3 kg is defined as Dh0, Dh0 is less than 7.5 mm.

2. The resin member according to claim 1, wherein in a photograph of a 0.25 mm × 0.25 mm field of view captured at ×500 magnification by an electron microscope such that a thickness direction central position of the resin member is at a center of the field of view and an up/down direction of the field of view corresponds to the thickness direction of the resin member, a number of continuous resin struts surrounding cell membranes is 0 or 1.

3. The resin member according to claim 1, wherein the resin member is at least one selected from the group consisting of a phenolic resin, a urethane resin, and a styrene resin.

4. The resin member according to claim 1, wherein the resin member is a phenolic resin.

5. A vacuum insulation panel comprising:
a sealed bag; and
the resin member according to any one of claim 1 to 4, sealed under a reduced pressure state inside of the bag.

6. The vacuum insulation panel according to claim 5, wherein the vacuum insulation panel has a density of not less than 60 kg/m³ and not more than 260 kg/m³.

7. The vacuum insulation panel according to claim 5, wherein the vacuum insulation panel has a thermal conductivity in a 23°C environment of 0.010 W/(m·K) or less.

8. The vacuum insulation panel according to claim 5, wherein the vacuum insulation panel has a surface smoothness level of 1.8 mm or less.

9. The vacuum insulation panel according to claim 5, wherein when an amount of indentation, in units of mm, of the vacuum insulation panel upon application of a load to the vacuum insulation panel in a parallel direction to the thickness direction of the resin member by cylindrical stainless steel SUS304 having a diameter of 6 mm and a mass of 5 kg is defined as Dh1, Dh1 is less than 7.5 mm.
